# EUROPÄISCHE PATENTSCHRIFT

(11) **EP 3 215 387 B1**
(45) Veröffentlichungstag und Bekanntmachung des Hinweises auf die Patenterteilung: **13.06.2018**
(21) Anmeldenummer: 15791576.0
(22) Anmeldetag: 05.11.2015
(51) Int. Cl.: B60K 23/08

(54) **VERFAHREN ZUM BETREIBEN EINES MEHRACHSANTRIEBSSTRANGS FÜR EIN KRAFTFAHRZEUG SOWIE ENTSPRECHENDER MEHRACHSANTRIEBSSTRANG**
METHOD FOR OPERATING A MULTI-AXLE POWERTRAIN FOR A MOTOR VEHICLE, AND CORRESPONDING MULTI-AXLE POWERTRAIN
PROCÉDÉ DE COMMANDE D'UNE TRANSMISSION POUR PLUSIEURS ESSIEUX D'UN VÉHICULE À MOTEUR ET TRANSMISSION CORRESPONDANTE

(30) Priorität: 06.11.2014 DE 102014016437
(43) Veröffentlichungstag der Anmeldung: 13.09.2017
(73) Patentinhaber: AUDI AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans Jörg, 85092 Kösching (DE)
(74) Vertreter: Lehle, Josef
(86) Internationale Anmeldenummer: PCT/EP2015/075782
(87) Internationale Veröffentlichungsnummer: WO 2016/071433

(56) Entgegenhaltungen:
- DE-A1-102012 020 906
- GB-A- 2 488 155
- US-A1- 2014 067 216
- US-A1- 2014 067 217

## Beschreibung

Die Erfindung betrifft ein Verfahren zum Betreiben eines Mehrachsantriebsstrangs für ein Kraftfahrzeug, wobei eine erste Achse permanent und eine zweite Achse über eine Schaltkupplung zumindest zeitweilig mit einer Antriebseinrichtung in Wirkverbindung steht. Die Erfindung betrifft weiterhin einen Mehrachsantriebsstrang.

Der Mehrachsantriebsstrang kann beispielsweise für ein Kraftfahrzeug verwendet werden und insbesondere Bestandteil des Kraftfahrzeugs sein. Der Mehrachsantriebsstrang ermöglicht das Antreiben mehrerer Achsen, beispielsweise der ersten Achse, insbesondere einer Vorderachse, und der zweiten Achse, insbesondere einer Hinterachse, des Kraftfahrzeugs. Eine Wirkverbindung zwischen den Achsen des Kraftfahrzeugs kann dabei beispielsweise über eine Verbindungswelle, welche vorzugsweise als Kardanwelle vorliegt, hergestellt werden.

Häufig ist es wünschenswert, dass mittels des Mehrachsantriebsstrangs lediglich zeitweise ein Mehrachsbetrieb durchgeführt wird, während welchem tatsächlich mehrere der Achsen, also insbesondere die erste Achse sowie die zweite Achse, angetrieben werden. Im Falle des Kraftfahrzeugs ist dies beispielsweise nur dann notwendig, wenn die Traktion bei einem Antreiben nur einer der Achsen, insbesondere der ersten Achse, zu gering wäre und/oder falls das gewünschte Fahrverhalten nur mit Mehrachsantrieb zu realisieren ist. Häufig ist es also sinnvoll, mittels des Mehrachsantriebsstrangs lediglich eine der Achsen, nämlich die erste Achse, anzutreiben.

Aus diesem Grund ist die erste Achse permanent mit der Antriebseinrichtung wirkverbunden. Die erste Achse wird insoweit permanent von der Antriebseinrichtung angetrieben. Eine Wirkverbindung zwischen der Antriebseinrichtung und der zweiten Achse liegt dagegen vorzugsweise lediglich zeitweilig vor, sodass die zweite Achse nur zeitweise von der Antriebseinrichtung angetrieben wird.

Zu diesem Zweck ist die Schaltkupplung vorgesehen, welche in der Wirkverbindung zwischen der Antriebseinrichtung und der zweiten Achse vorliegt. Bei geöffneter Schaltkupplung ist die Wirkverbindung zwischen der Antriebseinrichtung und der zweiten Achse unterbrochen, sodass lediglich die erste Achse angetrieben wird. Bei wenigstens teilweise geschlossener, insbesondere vollständig geschlossener Schaltkupplung wird dagegen ein Teil des Drehmoments der Antriebseinrichtung an die zweite Achse übertragen.

Aus dem Stand der Technik ist beispielsweise die Druckschrift US 2014/0067217 A1 bekannt, die ein Kraftfahrzeug sowie ein Verfahren zum Betreiben eines Kraftfahrzeugs betrifft. Es ist vorgesehen, dass eine erste Achse des Kraftfahrzeugs permanent und eine zweite Achse des Kraftfahrzeugs über Schaltkupplungen zumindest zeitweise mit einer Brennkraftmaschine gekoppelt ist.

Es ist nun Aufgabe der Erfindung, ein Verfahren zum Betreiben eines Mehrachsantriebsstrangs vorzuschlagen, welches gegenüber dem Stand der Technik Vorteile aufweist, insbesondere zum einen einen Kraftstoffverbrauch des Mehrachsantriebsstrangs verringert, indem nach Möglichkeit lediglich die erste Achse mittels der Antriebseinrichtung angetrieben wird, und zum anderen dennoch in jedem Fahrzustand des Kraftfahrzeugs eine hervorragende Traktion des Kraftfahrzeugs ermöglicht.

Dies wird erfindungsgemäß mit dem Verfahren mit den Merkmalen des Anspruchs 1 erreicht. Dabei ist vorgesehen, dass bei von der Antriebseinrichtung entkoppelter zweiter Achse und geöffneter Anfahrkupplung eine zu erwartende Radkraft prädiktiv ermittelt wird, wobei bei dem Ermitteln der Radkraft ein von einem Massenträgheitsmoment der Antriebseinrichtung verursachtes Drehmoment berücksichtigt wird, und wobei die zweite Achse mit der Antriebseinrichtung gekoppelt wird, wenn die zu erwartende Radkraft eine maximale Radkraft übersteigt. Das Verfahren kommt insoweit dann zum Einsatz, wenn momentan die Traktion ausreichend ist, um lediglich die erste Achse, nicht jedoch die zweite Achse, mittels der Antriebseinrichtung anzutreiben.

Der Mehrachsantriebsstrang verfügt vorzugsweise über ein Schaltgetriebe, mittels welchem einer von mehreren Fahrgängen einstellbar ist. Jedem Fahrgang ist dabei eine von den anderen Fahrgängen vorzugsweise verschiedene Übersetzung zwischen der Antriebseinrichtung einerseits und der ersten Achse und der zweiten Achse andererseits zugeordnet. Um einen Gangwechsel des Schaltgetriebes zu ermöglichen, ist die Anfahrkupplung vorgesehen, welche beispielsweise in einer Wirkverbindung zwischen der Antriebseinrichtung und dem Schaltgetriebe vorgesehen ist. Mithilfe der Anfahrkupplung kann insoweit die Wirkverbindung zwischen der Antriebseinrichtung und dem Schaltgetriebe wahlweise unterbrochen oder zumindest teilweise, insbesondere vollständig, hergestellt werden.

Die Anfahrkupplung ist von der Schaltkupplung verschieden. Während die Anfahrkupplung in der Wirkverbindung zwischen der Antriebseinrichtung einerseits und sowohl der ersten Achse als auch der zweiten Achse andererseits vorliegt, dient die Schaltkupplung lediglich dem Herstellen beziehungsweise Wirkverbinden der zweiten Achse mit der Antriebseinrichtung, liegt also beispielsweise in der Wirkverbindung zwischen der ersten Achse und der zweiten Achse vor. Im Rahmen der vorstehenden Ausführungen sind beispielsweise die Anfahrkupplung und das Schaltgetriebe der Antriebseinrichtung zugeordnet, sodass gemäß den vorstehenden Ausführungen die erste Achse permanent mit der Antriebseinrichtung wirkverbunden beziehungsweise von dieser angetrieben sein kann, während die zweite Achse mittels der Schaltkupplung von der Antriebseinrichtung entkoppelbar ist.

Wie bereits erläutert, betätigt der Fahrer des Kraftfahrzeugs die Anfahrkupplung, wenn er an dem Schaltgetriebe einen Gangwechsel durchführen möchte. Bei geöffneter Anfahrkupplung, also bei unterbrochener Wirkverbindung zwischen der Antriebseinrichtung und sowohl der ersten Achse als auch der zweiten Achse, wird die zu erwartende Radkraft prädiktiv ermittelt. Die zu erwartende Radkraft entspricht dabei derjenigen Radkraft, welche während des Schließens der Anfahrkupplung und/oder bei vollständig geschlossener Anfahrkupplung voraussichtlich vorliegen wird.

Die zu erwartende Radkraft ist dabei insbesondere fahrerabhängig. Dies liegt daran, dass beispielsweise ein erster Fahrer die Anfahrkupplung zumindest im Mittel langsam betätigt beziehungsweise langsam schließt. Dies führt zu einer geringen zu erwartenden Radkraft. Ein zweiter Fahrer kuppelt jedoch unter Umständen zumindest im Mittel schneller, sodass die zu erwartende Radkraft größer ist als im Falle des ersten Fahrers. Es kann also der Fall auftreten, dass es für den ersten Fahrer ausreichend ist, das von der Antriebseinrichtung bereitgestellte Drehmoment lediglich zum Antreiben der ersten Achse zu verwenden beziehungsweise dieses Drehmoment lediglich über die erste Achse an einen Untergrund des Kraftfahrzeugs zu übertragen. Im Falle des zweiten Fahrers kann dies nicht ausreichend sein, sodass bei geöffneter Schaltkupplung Räder der ersten Achse auf dem Untergrund durchdrehen. Aus diesem Grund soll in diesem Fall vor dem Schließen der Anfahrkupplung, insbesondere unmittelbar vor dem Schließen oder zumindest während des Schließens, spätestens am Ende des Schließens, die Schaltkupplung vorzugsweise vollständig geschlossen sein, sodass das von der Antriebseinheit bereitgestellte Drehmoment über sowohl die erste als auch die zweite Achse an den Untergrund übertragen wird und somit beide Achsen zum Antreiben des Kraftfahrzeugs herangezogen werden.

Entsprechend ist es vorgesehen, die zweite Achse mit der Antriebseinrichtung zu koppeln, vorzugsweise nur dann, insbesondere durch Schließen der Schaltkupplung, wenn die zu erwartende Radkraft die maximale Radkraft übersteigt. Die maximale Radkraft kann dabei beispielsweise ein fest vorgegebener Wert sein oder jedoch situationsabhängig ermittelt werden. Mit Hilfe des beschriebenen Verfahrens kann somit zum einen der geringe Kraftstoffverbrauch erzielt werden, weil die zweite Achse nicht bei jedem Schließen der Anfahrkupplung mit der Antriebseinrichtung gekoppelt wird. Dennoch ist sichergestellt, dass stets eine hervorragende Traktion vorliegt, insbesondere auch bei sportlicher Fahrweise, welche von dem vorstehend beispielhaft erwähnten zweiten Fahrer durchgeführt wird,

Es ist vorgesehen, dass die zu erwartende Radkraft unter Berücksichtigung des Drehmoments ermittelt wird, das von einem Massenträgheitsmoment der Antriebseinrichtung verursachtes wird. Das Drehmoment resultiert aus einer Reduzierung der Drehzahl der Antriebseinrichtung beim Schließen der Anfahrkupplung, insbesondere wenn der Fahrer an dem Schaltgetriebe einen höheren Gang eingelegt hat und insoweit die Drehzahl einer Eingangswelle des Schaltgetriebes kleiner ist als die Drehzahl der Antriebseinrichtung. Selbstverständlich kann die Drehzahl der Antriebseinrichtung auf die der Eingangswelle übersteigen, wenn die Anfahrkupplung zumindest teilweise, insbesondere vollständig geöffnet ist und die Antriebseinrichtung ein Drehmoment erzeugt, welches ausreichend ist, um ihre Drehzahl zu vergrößern. Das Massenträgheitsmoment ist eine Eigenschaft der Antriebseinrichtung, insbesondere ist es über der Zeit konstant oder zumindest im Wesentlichen konstant. Das Drehmoment ergibt sich vorzugsweise aus dem Massenträgheitsmoment sowie einer Drehzahlgröße, beispielsweise einem Drehzahlgradient. Insbesondere ist das Drehmoment das Produkt aus Massenträgheitsmoment und Drehzahlgradient.

Das aufgrund des Massenträgheitsmoments der Antriebseinrichtung auftretende Drehmoment wirkt bei einem Schließen der Anfahrkupplung einer Reduzierung der Drehzahl der Antriebseinrichtung entgegen. Anders ausgedrückt bewirkt das Massenträgheitsmoment das zusätzliche Drehmoment, welches die Radkraft beeinflusst. Insbesondere tritt das aufgrund des Massenträgheitsmoments auftretende Drehmoment zu einem an der Antriebseinrichtung eingestellten Drehmoment hinzu. Das zusätzliche Drehmoment tritt insoweit insbesondere dann auf, wenn die Anfahrkupplung wieder geschlossen wird, um das von der Antriebseinrichtung erzeugte Drehmoment über das Schaltgetriebe und zumindest die erste Achse, insbesondere jedoch die erste Achse sowie die zweite Achse, auf den Untergrund des Kraftfahrzeugs zu übertragen, um eine Beschleunigung des Kraftfahrzeugs zu erzielen.

In einer bevorzugten Ausgestaltung der Erfindung ist vorgesehen, dass die zu erwartende Radkraft, insbesondere das von dem Massenträgheitsmoment verursachte Drehmoment, aus einer Drehzahlgröße der Antriebseinrichtung und/oder einem zeitlichen Verlauf der Drehzahlgröße bestimmt wird. Die Drehzahlgröße ist vorzugsweise eine der Drehzahl der Antriebseinrichtung entsprechende Größe oder eine mit dieser korrespondierende Größe, welche insbesondere aus der Drehzahl der Antriebseinrichtung abgeleitet wird.

Die zu erwartende Radkraft kann in Abhängigkeit von der momentanen Drehzahlgröße ermittelt werden. Beispielsweise ist die zu erwartende Radkraft bei einer größeren Drehzahlgröße größer als bei einer kleineren Drehzahlgröße. Auch der zeitliche Verlauf der Drehzahlgröße kann zusätzlich oder alternativ herangezogen werden. Es kann vorgesehen sein, dass das aufgrund des Massenträgheitsmoments auftretende Drehmoment beziehungsweise die entsprechende Radkraft aus der Drehzahlgröße und/oder ihrem zeitlichen Verlauf gelernt wird. Anschließend kann prädiktiv die zu erwartende Radkraft ermittelt werden.

Beispielsweise wird anhand der Drehzahlgröße und/oder des zeitlichen Verlaufs der Drehzahlgröße auf eine Fahrweise des momentanen Fahrers des Kraftfahrzeugs geschlossen. Besonders bevorzugt wird die Fahrweise kategorisiert und, beispielsweise im Rahmen eines periodisch durchgeführten Lernprozesses, in mehrere Stufen aufgeteilt. Je höher die Stufe, umso sportlicher ist die Fahrweise des Fahrers. Das bedeutet jedoch auch, dass die zu erwartende Radkraft umso höher ist, je höher die dem Fahrer zugeordnete Stufe ist. Es kann besonders bevorzugt vorgesehen sein, die auf diese Art und Weise ermittelte Stufe zwischenzuspeichern und dem Fahrer zuzuordnen. Tritt derselbe Fahrer erneut eine Fahrt mit dem Kraftfahrzeug an, so kann unmittelbar auf die Stufe zurückgegriffen werden, sodass insoweit der Lernprozess abgekürzt werden kann.

Eine Weiterbildung der Erfindung sieht vor, dass als Drehzahlgröße ein Drehzahlgradient verwendet wird. Vorstehend wurde bereits erläutert, dass die Drehzahlgröße eine von der Drehzahl der Antriebseinrichtung abgeleitete Größe sein kann. Vorzugsweise wird der Drehzahlgradient herangezogen, welcher der zeitlichen Ableitung der Drehzahl über der Zeit entspricht und insoweit eine Beschleunigung beziehungsweise eine Verzögerung einer Antriebswelle der Antriebseinrichtung beschreibt. Die Antriebswelle der Antriebseinrichtung ist, vorzugsweise über die Anfahrkupplung, mit einer Eingangswelle des Schaltgetriebes verbunden. Bevorzugt wird insoweit die beim Schließen der Anfahrkupplung zu erwartende Drehzahlgröße beziehungsweise der zu erwartende Drehzahlgradient gelernt, sodass die Drehzahlgröße beziehungsweise der Drehzahlgradient nachfolgend zum prädiktiven Ermitteln der Radkraft herangezogen werden kann.

In einer weiteren Ausgestaltung der Erfindung ist vorgesehen, dass die Drehzahlgröße in Abhängigkeit von einem Fahrer des Kraftfahrzeugs, einem Kupplungsverhalten und/oder einer Fahrsituation abgeschätzt wird. Insoweit wird die Drehzahlgröße auf Grundlage wenigstens eines Parameters, vorzugsweise mehrerer Parameter abgeschätzt und anschließend dem Ermitteln der zu erwartenden Radkraft zugrunde gelegt. Dabei kann es selbstverständlich vorgesehen sein, dass die bei einem oder mehreren Kupplungsvorgängen der Anfahrkupplung auftretende Drehzahlgröße beziehungsweise die auftretenden Drehzahlgrößen in Abhängigkeit von dem Fahrer, dem Kupplungsverhalten und/oder der Fahrsituation abgespeichert beziehungsweise hinterlegt wird/werden. Insoweit erfolgt ein Lernen der Drehzahlgröße.

Eine weitere bevorzugte Ausgestaltung der Erfindung sieht vor, dass aus der Massenträgheit und einem Triebstrang-Übersetzungsverhältnis ein Achsmoment für die erste Achse bestimmt wird. Das Triebstrang-Übersetzungsverhältnis entspricht der Übersetzung, welche zwischen der Antriebseinrichtung und der ersten Achse vorliegt. Insoweit kann anhand des Massenträgheitsmoment und der Drehzahlgröße auf das Achsmoment geschlossen werden, welches an der ersten Achse zu erwarten sein wird, sobald die Anfahrkupplung geschlossen wird oder geschlossen ist. Neben dem Massenträgheitsmoment und der Drehzahlgröße kann selbstverständlich wenigstens eine weiter Größen berücksichtigt werden, insbesondere das an der Antriebseinrichtung eingestellte beziehungsweise das von dieser erzeugte Drehmoment.

Eine weitere Ausgestaltung der Erfindung sieht vor, dass aus dem Achsmoment und Abmessungen der an der ersten Achse angeordneten Räder auf die Radkraft an einem der Räder geschlossen wird. Das an der ersten Achse anliegende Achsmoment wird über die an der ersten Achse vorgesehenen Räder auf den Untergrund des Kraftfahrzeugs übertragen. Dabei teilt sich das Achsmoment vorzugsweise auf mehrere Radmomente auf, wobei jedem an der ersten Achse angeordneten Rad ein derartiges Radmoment zugeordnet ist.

Aus dem Radmoment kann wiederum auf die Radkraft geschlossen werden, welche zwischen dem jeweiligen Rad und dem Untergrund wirkt. Die Radkraft stellt also diejenige Größe dar, welche unmittelbar einer Traktion des Rads auf dem Untergrund entspricht. Je höher die Radkraft, umso höher ist die Beschleunigung des Kraftfahrzeugs beziehungsweise umso größer ist der Anteil des von der Antriebseinrichtung bereitgestellten Drehmoments, welches über das Rad beziehungsweise die erste Achse auf den Untergrund übertragbar ist.

In einer weiteren bevorzugten Ausgestaltung der Erfindung ist vorgesehen, dass die maximale Radkraft aus einer Achslast und einem zwischen dem Rad und einem Untergrund vorliegenden Reibwert ermittelt wird. Vorstehend wurde bereits erläutert, dass die zu erwartende Radkraft mit der maximalen Radkraft verglichen wird. Die zweite Achse wird anschließend, insbesondere nur dann, mit der Antriebseinrichtung gekoppelt, wenn die zu erwartende Radkraft die maximale Radkraft übersteigt.

Zur Ermittlung der maximalen Radkraft, also derjenigen Radkraft, welche mittels des Rads maximal auf den Untergrund übertragbar ist, wird die momentan an dem Rad vorliegende Achslast ermittelt, welche insbesondere von der Masse des Kraftfahrzeugs abhängt. Die Masse kann dabei einer Leermasse des Kraftfahrzeugs entsprechen, abgeschätzt oder gemessen werden. Weiterhin wird der zwischen dem Rad und dem Untergrund vorliegende Reibwert ermittelt. Zu diesem Zweck können unterschiedliche Vorgehensweisen herangezogen werden. Beispielsweise wird der Reibwert als konstanter Wert vorgegeben, abgeschätzt oder messtechnisch ermittelt. Aus der Achslast und dem Reibwert ergibt sich unmittelbar die maximale Radkraft, welche über das Rad übertragbar ist.

Eine weitere besonders bevorzugte Ausgestaltung der Erfindung sieht vor, dass die Achslast gemessen wird, insbesondere mittels wenigstens eines an einem Stoßdämpfer der ersten Achse angeordneten Sensors. Beispielsweise wird mit Hilfe des Sensors die Auslenkung des Stoßdämpfers, vorzugsweise die mittlere Auslenkung des Stoßdämpfers, bestimmt. Anschließend kann aus dieser Auslenkung und einer Federkraft des Stoßdämpfers auf die Achslast und/oder die Masse des Kraftfahrzeugs geschlossen werden.

Schließlich kann in einer weiteren Ausgestaltung der Erfindung vorgesehen sein, dass als Anfahrkupplung eine manuell betätigte Anfahrkupplung verwendet wird. Die Anfahrkupplung ist insoweit lediglich manuell durch den Fahrer des Kraftfahrzeugs betätigbar. Es ist nicht vorgesehen, dass die Anfahrkupplung von einem Steuergerät des Kraftfahrzeugs angesteuert wird. Insoweit liegt auch das Schaltgetriebe des Kraftfahrzeugs vorzugsweise als manuelles Schaltgetriebe vor und nicht etwa als Automatikgetriebe. Selbstverständlich sind jedoch auch derartige Ausführungsformen realisierbar. Die Erfindung betrifft weiterhin einen Mehrachsantriebsstrang für ein Kraftfahrzeug, insbesondere zur Durchführung des vorstehend erläuterten Verfahrens, wobei eine erste Achse permanent und eine zweite Achse über eine Schaltkupplung zumindest zeitweilig mit einer Antriebseinrichtung in Wirkverbindung steht. Dabei ist vorgesehen, dass der Mehrachsantriebsstrang dazu ausgebildet ist, bei von der Antriebseinrichtung entkoppelter zweiter Achse und geöffneter Anfahrkupplung eine zu erwartende Radkraft prädiktiv zu ermitteln, wobei bei dem Ermitteln der Radkraft ein von einem Massenträgheitsmoment der Antriebseinrichtung verursachtes Drehmoment berücksichtigt wird, und wobei die zweite Achse mit der Antriebseinrichtung gekoppelt wird, wenn die zu erwartende Radkraft eine maximale Radkraft übersteigt.

Auf die Vorteile einer derartigen Vorgehensweise beziehungsweise einer derartigen Ausgestaltung des Mehrachsantriebsstrangs wurde bereits eingegangen. Sowohl der Mehrachsantriebsstrang als auch das Verfahren können gemäß den vorstehenden Ausführungen weitergebildet sein, sodass insoweit auf diese verwiesen wird.

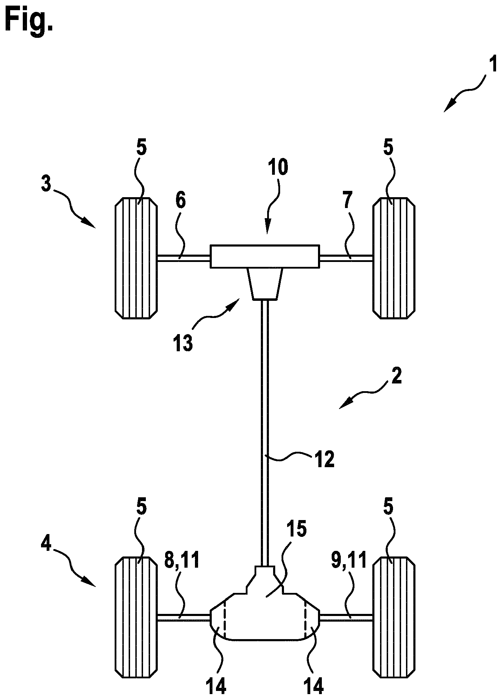

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Mehrachsantriebsstrangs für ein Kraftfahrzeug.

Die Figur zeigt einen Mehrachsantriebsstrang 1 für ein nicht weiter dargestelltes Kraftfahrzeug. Der Mehrachsantriebsstrang 1 verfügt über eine Mehrachsantriebseinrichtung 2, welche zum wahlweisen Betreiben nur einer ersten Achse 3 oder der ersten Achse 3 sowie einer zweiten Achse 4 dient. Jede der Achsen 3 und 4 verfügt in dem hier dargestellten Ausführungsbeispiel über zwei Räder 5, die an Teilachsen 6 und 7 der ersten Achse 3 und Teilachsen 8 und 9 der zweiten Achse 4 angeordnet sind. Es kann nun vorgesehen sein, dass die Teilachsen 6 und 7 der ersten Achse 3 eine erste Abtriebswelle 10 bilden. Besonders bevorzugt sind sie jedoch über ein Differentialgetriebe, insbesondere ein Achsdifferentialgetriebe an die erste Abtriebswelle 10 angeschlossen, also insbesondere starr und/oder permanent mit ihr wirkverbunden. Die Teilachsen 8 und 9 können jeweils als eine zweite Abtriebswelle 11 vorliegen. Alternativ kann es vorgesehen sein, dass die Teilachsen 8 und 9 über ein Differentialgetriebe, insbesondere ein Achsdifferentialgetriebe, an die zweite Abtriebswelle 11 angeschlossen sind.

Die Mehrachsantriebseinrichtung 2 verfügt über eine Verbindungswelle 12, über welche eine Wirkverbindung zwischen der ersten Achse 3 und der zweiten Achse 4 hergestellt werden kann. Die Verbindungswelle 12 ist vorzugsweise als Kardanwelle ausgeführt. In einer Wirkverbindung zwischen der ersten Abtriebswelle 10 und der Verbindungswelle 12 ist eine Synchronisierungskupplung 13 angeordnet. Die Synchronisierungskupplung 13 ist vorzugsweise als kraftschlüssige Kupplung ausgestaltet. Sie ermöglicht insbesondere das Übertragen eines beliebigen Anteils des anliegenden Drehmoments. In einer Wirkverbindung zwischen der Verbindungswelle 12 und der zweiten Abtriebswelle 11 ist zudem eine Trennkupplung 14 angeordnet. In dem hier dargestellten Ausführungsbeispiel liegen insoweit zwei Trennkupplungen 14 vor, wobei jeweils eine der Trennkupplungen 14 zwischen einem Differentialgetriebe 15 und einer der beiden zweiten Abtriebswellen 11 beziehungsweise den Teilachsen 8 und 9 angeordnet ist. Die Verbindungswelle 12 ist dabei starr und/oder permanent mit dem Differentialgetriebe 15 wirkverbunden. Die Wirkverbindung zwischen dem Differentialgetriebe 15 und mithin der Verbindungswelle 12 einerseits sowie den zweiten Abtriebswellen 11 in Form der Teilachsen 8 und 9 andererseits kann mit Hilfe der Trennkupplung 14 wahlweise hergestellt oder unterbrochen sein. Vorzugsweise befinden sich die Trennkupplungen 14 stets in der gleichen Stellung, sodass entweder eine Wirkverbindung zwischen der Verbindungswelle 12 einerseits und den Teilachsen 8 und 9 andererseits hergestellt oder unterbrochen ist.

In einem ersten Betriebszustand der Mehrachsantriebsvorrichtung 2 sind die Synchronisierungskupplung 13 und die Trennkupplung 14 geöffnet, sodass die Wirkverbindung zwischen der ersten Abtriebswelle 10 und der zweiten Abtriebswelle 11 unterbrochen ist. Insoweit nachfolgend lediglich von einer Trennkupplung 14 oder einer zweiten Abtriebswelle 11 die Rede ist, so sind im Rahmen des vorliegenden Ausführungsbeispiels stets beide Abtriebswellen 11 beziehungsweise beide Trennkupplungen 14 gemeint. In einem zweiten Betriebszustand sind die Synchronisierungskupplung 13 und die Trennkupplung 14 vollständig geschlossen. Die Trennkupplung 14 ist bevorzugt als Formschlusskupplung, insbesondere als Klauenkupplung, ausgeführt.

Im Rahmen des hier vorgestellten Mehrachsantriebsstrangs 1 ist die erste Achse 3 mit einer hier nicht dargestellten Antriebseinrichtung wirkverbunden beziehungsweise wird von dieser angetrieben. Die zweite Achse wird dagegen lediglich zeitweilig über eine Schaltkupplung mit der Antriebseinrichtung wirkverbunden und insoweit von dieser angetrieben. Die Schaltkupplung kann von der Synchronisierungskupplung 13 und/oder den Trennkupplungen 14 dargestellt sein. Von Bedeutung ist dabei lediglich, dass mithilfe der Schaltkupplung die Wirkverbindung zwischen der Antriebseinrichtung und der zweiten Antriebswelle 11 unterbrechbar ist.

Der Mehrachsantriebsstrang 1 wird nun derart betrieben, dass bei von der Antriebseinrichtung entkoppelter zweiter Achse 4 und geöffneter Anfahrkupplung, welche zwischen der Antriebseinrichtung und sowohl der ersten Achse 3 als auch der zweiten Achse 4 vorliegt, eine zu erwartende Radkraft prädiktiv ermittelt wird, wobei bei dem Ermitteln der Radkraft ein von einem Massenträgheitsmoment der Antriebseinrichtung verursachtes Drehmoment berücksichtigt wird, und wobei die zweite Achse 4 mit der Antriebseinrichtung gekoppelt wird, wenn die zu erwartende Radkraft eine maximale Radkraft übersteigt. Auf diese Art und Weise kann sowohl der Kraftstoffverbrauch des Mehrachsantriebsstrangs 1 reduziert werden als auch in jeder Fahrsituation eine hervorragende Traktion bereitgestellt werden.

## Patentansprüche

1. Verfahren zum Betreiben eines Mehrachsantriebsstrangs (1) für ein Kraftfahrzeug, wobei eine erste Achse (3) permanent und eine zweite Achse (4) über eine Schaltkupplung (13,14) zumindest zeitweilig mit einer Antriebseinrichtung in Wirkverbindung steht, **dadurch gekennzeichnet, dass** bei von der Antriebseinrichtung entkoppelter zweiter Achse (4) und geöffneter Anfahrkupplung eine zu erwartende Radkraft prädiktiv ermittelt wird, wobei bei dem Ermitteln der Radkraft ein von einem Massenträgheitsmoment der Antriebseinrichtung verursachtes Drehmoment berücksichtigt wird, und wobei die zweite Achse (4) mit der Antriebseinrichtung gekoppelt wird, wenn die zu erwartende Radkraft eine maximale Radkraft übersteigt.

2. Verfahren nach Anspruch 1, **dadurch gekennzeichnet, dass** die zu erwartende Radkraft, insbesondere das von dem Massenträgheitsmoment verursachte Drehmoment, aus einer Drehzahlgröße der Antriebseinrichtung und/oder einem zeitlichen Verlauf der Drehzahlgröße bestimmt wird.

3. Verfahren nach Anspruch 2, **dadurch gekennzeichnet, dass** als Drehzahlgröße ein Drehzahlgradient verwendet wird.

4. Verfahren nach Anspruch 2 oder 3, **dadurch gekennzeichnet, dass** die Drehzahlgröße in Abhängigkeit von einem Fahrer des Kraftfahrzeugs, einem Kupplungsverhalten und/oder einer Fahrsituation abgeschätzt wird.

5. Verfahren nach einem der vorhergehenden Ansprüche, **dadurch gekennzeichnet, dass** aus der Massenträgheit und einem Triebstrang-Übersetzungsverhältnis ein Achsmoment für die erste Achse (3) bestimmt wird.

6. Verfahren nach Anspruch 5, **dadurch gekennzeichnet, dass** aus dem Achsmoment und Abmessungen der an der ersten Achse (3) angeordneten Räder (5) auf die Radkraft an einem der Räder (5) geschlossen wird.

7. Verfahren nach einem der vorhergehenden Ansprüche, **dadurch gekennzeichnet, dass** die maximale Radkraft aus einer Achslast und einem zwischen dem Rad (5) und einem Untergrund vorliegenden Reibwert ermittelt wird.

8. Verfahren nach Anspruch 7, **dadurch gekennzeichnet, dass** die Achslast gemessen wird, insbesondere mittels wenigstens eines an einem Stoßdämpfer der ersten Achse (3) angeordneten Sensors.

9. Verfahren nach einem der vorhergehenden Ansprüche, **dadurch gekennzeichnet, dass** als Anfahrkupplung eine manuell betätigte Anfahrkupplung verwendet wird.

10. Mehrachsantriebsstrang (1) für ein Kraftfahrzeug, wobei eine erste Achse (3) permanent und eine zweite Achse (4) über eine Schaltkupplung zumindest zeitweilig mit einer Antriebseinrichtung in Wirkverbindung steht, **dadurch gekennzeichnet, dass** der Mehrachsantriebsstrang (1) dazu ausgebildet ist, bei von der Antriebseinrichtung entkoppelter zweiter Achse (4) und geöffneter Anfahrkupplung eine zu erwartende Radkraft prädiktiv zu ermitteln, wobei bei dem Ermitteln der Radkraft ein von einem Massenträgheitsmoment der Antriebseinrichtung verursachtes Drehmoment berücksichtigt wird, und wobei die zweite Achse (4) mit der Antriebseinrichtung gekoppelt wird, wenn die zu erwartende Radkraft eine maximale Radkraft übersteigt.

## Claims

1. Method for operating a multi-axle powertrain (1) for a motor vehicle, wherein a first axle (3) is in permanent operational connection, and a second axle (4) via a clutch (13, 14) is at least temporarily in operational connection with a drive apparatus, **characterised in that** when the second axle (4) is decoupled from the drive apparatus and the start clutch is opened, an expected wheel force is predictably determined, wherein when determining the wheel force, a torque caused by a mass moment of inertia of the drive apparatus is taken into consideration, and wherein the second axle (4) is coupled with the drive apparatus when the wheel force to be expected exceeds a maximum wheel force.

2. Method according to claim 1, **characterised in that** the wheel force to be expected, in particular the torque caused by the mass moment of inertia, is determined from a rotational speed value of the drive apparatus and/or a temporal course of the rotational speed value.

3. Method according to claim 2, **characterised in that** a rotational speed gradient is used as a rotational speed value.

4. Method according to claim 2 or 3, **characterised in that** the rotational speed value is estimated depending on a driver of the motor vehicle, a clutch behaviour and/or a driving situation.

5. Method according to one of the preceding claims, **characterised in that** an axle moment for the first axle (3) is determined from the mass moment of inertia and a powertrain transmission ratio.

6. Method according to claim 5, **characterised in that** the wheel force at one of the wheels (5) is extrapolated from the axle moment and sizes of the wheels (5) disposed at the first axle (3).

7. Method according to one of the preceding claims, **characterised in that** the maximum wheel force is determined from an axle load and a friction coefficient being present between the wheel (5) and a ground.

8. Method according to claim 7, **characterised in that** the axle load is measured in particular by using at least one sensor disposed at a shock absorber of the first axle (3).

9. Method according to one of the preceding claims, **characterised in that** a manually operated start clutch is used as a start clutch.

10. Multi-axle powertrain (1) for a motor vehicle, wherein a first axle (3) is in permanent operational connection, and a second axle (4) via a clutch is at least temporarily in operational connection with a drive apparatus, **characterised in that** the multi-axle powertrain (1) is designed so that when the second axle (4) is decoupled from the drive apparatus and the start clutch is opened, an expected wheel force is predictably determined, wherein when determining the wheel force, a torque caused by a mass moment of inertia of the drive apparatus is taken into consideration, and wherein the second axle (4) is coupled with the drive apparatus when the wheel force to be expected exceeds a maximum wheel force.

## Revendications

1. Procédé de fonctionnement d'un groupe d'entraînement d'essieux multiples (1) pour un véhicule automobile,
dans lequel un premier essieu (3) est en liaison active en permanence avec un dispositif d'entraînement et un deuxième essieu (4) est en liaison active au moins temporairement avec le dispositif d'entraînement par l'intermédiaire d'un embrayage (13, 14),
**caractérisé en ce que,** lorsque le deuxième essieu (4) est débrayé du dispositif d'entraînement et lorsque l'embrayage de démarrage est ouvert, une force de roue à laquelle s'attendre est déterminée de manière prédictive,
dans lequel un couple dû à un moment d'inertie de masse du dispositif d'entraînement est pris en compte lors de la détermination de la force de roue et dans lequel le deuxième essieu (4) est embrayé avec le dispositif d'entraînement lorsque la force de roue à laquelle s'attendre dépasse une force de roue maximale.

2. Procédé selon la revendication 1, **caractérisé en ce que** la force de roue à laquelle s'attendre, en particulier le couple dû au moment d'inertie de masse, est déterminée à partir d'une grandeur de vitesse de rotation du dispositif d'entraînement et/ou d'une allure temporelle de la grandeur de vitesse de rotation.

3. Procédé selon la revendication 2, **caractérisé en ce qu'**un gradient de vitesse de rotation est utilisé comme grandeur de vitesse de rotation.

4. Procédé selon la revendication 2 ou 3, **caractérisé en ce que** la grandeur de vitesse de rotation est estimée en fonction d'un conducteur du véhicule automobile, d'un comportement d'embrayage et/ou d'une situation de roulage.

5. Procédé selon l'une quelconque des revendications précédentes, **caractérisé en ce qu'**un couple d'essieu est déterminé pour le premier essieu (3) à partir de l'inertie de masse et d'un rapport de démultiplication de la chaîne de transmission.

6. Procédé selon la revendication 5, **caractérisé en ce que,** à partir du couple d'essieu et des dimensions des roues (5) agencées sur le premier essieu (3), on déduit la force de roue au niveau de l'une des roues (5).

7. Procédé selon l'une quelconque des revendications précédentes, **caractérisé en ce que** la force de roue maximale est déterminée à partir d'une charge d'essieu et d'une valeur de frottement présente entre la roue (5) et un sol.

8. Procédé selon la revendication 7, **caractérisé en ce que** la charge d'essieu est mesurée, en particulier au moyen d'au moins un capteur agencé au niveau d'un amortisseur du premier essieu (3).

9. Procédé selon l'une quelconque des revendications précédentes, **caractérisé en ce qu'**un embrayage de démarrage actionné manuellement est utilisé comme embrayage de démarrage.

10. Groupe d'entraînement d'essieux multiples (1) pour un véhicule automobile, dans lequel un premier essieu (3) est en liaison active en permanence avec un dispositif d'entraînement et un deuxième essieu (4) est en liaison active au moins temporairement avec le dispositif d'entraînement par l'intermédiaire d'un embrayage, **caractérisé en ce que** le groupe d'entraînement d'essieux multiples (1) est conçu pour, lorsque le deuxième essieu (4) est débrayé du dispositif d'entraînement et lorsque l'embrayage de démarrage est ouvert, déterminer de manière prédictive une force de roue à laquelle s'attendre,
dans lequel un couple dû à un moment d'inertie de masse du dispositif d'entraînement est pris en compte lors de la détermination de la force de roue et dans lequel le deuxième essieu (4) est embrayé avec le dispositif d'entraînement lorsque la force de roue à laquelle s'attendre dépasse une force de roue maximale.
